Europäisches Patentamt

European Patent Office

Office européen des brevets

(19)

(11) Publication number: **0 301 715 B1**

## EUROPEAN PATENT SPECIFICATION

(12)

(45) Date of publication of patent specification: **09.12.92**

(51) Int. Cl.⁵: **H04N 9/12**, H04N 3/12, H04N 9/30, G02F 1/133

(21) Application number: **88306147.5**

(22) Date of filing: **06.07.88**

---

(54) **Display device.**

---

(30) Priority: **30.07.87 GB 8718046**

(43) Date of publication of application:
**01.02.89 Bulletin 89/05**

(45) Publication of the grant of the patent:
**09.12.92 Bulletin 92/50**

(84) Designated Contracting States:
**AT BE CH DE ES FR GB GR IT LI LU NL SE**

(56) References cited:
WO-A-82/02634        WO-A-82/02635
GB-A- 1 433 327        GB-A- 2 172 733
JP-A-62 106 437        US-A- 3 569 614

**PATENT ABSTRACTS OF JAPAN volume 11, no. 319 (P-627) (2766), 17th October 1987**

**PATENT ABSTRACTS OF JAPAN volume 6, no. 18 (P-100) (896), 2nd February 1982**

(73) Proprietor: **THORN EMI plc**
**4 Tenterden Street**
**London W1A 2AY(GB)**

(72) Inventor: **Wright, Graham Leslie**
**38, Greenacres Avenue Ickenham**
**Uxbridge Middlesex, UB10 8HO(US)**

(74) Representative: **Hurst, Richard Arthur Alexander et al**
**THORN EMI Patents Limited, Central Research Laboratories, Dawley Road**
**Hayes, Middlesex UB3 1HH(GB)**

---

## Description

The present invention relates to a liquid crystal display.

British Patent Specification No. 1433327 discloses a colour television display using three constant light sources producing red, green and blue light respectively to light a matrix of cells via a plurality of optical fibres. Associated with each source is a single liquid crystal cell whose transmission is modulated by the corresponding colour component of the video signal. The cells of the matrix are addressed sequentially and switched on and off to provide the television scan.

British Patent Specification GB-A-2172733A discloses a three-colour field-sequential television display in which three light sources are switched on sequentially for a third of a field period. A matrix of liquid crystal cells controlled by the video signal modulates the intensity of the light emitted by the switched light source. A problem with such a display is that it is difficult to obtain light sources with suitable switching characteristics. In one embodiment, shown in Figure 8 of that document, there is provided, however, a single non-switched light source and a rotatable multi-coloured, segmented filter.

The present invention provides a display device comprising: A matrix of selectively settable liquid crystal cells for displaying a video image; and light source means for providing a plurality of different colours, said light source means arranged for illuminating the whole of said matrix in a cyclically repeating and non-overlapping sequence with light of each different colour; the device characterised by light shutter means comprising a plurality of liquid crystal portions which portions are disposed respectively in the path to said matrix of each of said different colours; and switching means for causing each liquid crystal portion to repetitively interrupt, in accordance with said sequence, the light of its respective colour by inhibiting the transmission of light therethrough.

Preferably, the display device has three light sources, each corresponding to a different primary colour, each light source having a separate associated light-shutter means.

In this way, the initiation and termination of the illumination operation is achieved by the switching of the liquid crystal portion of the light shutter, which can be effected much faster than can the energisation or de-energisation of the light source itself. The light sources can be maintained on at all times. Alternatively, they can be switched to a "power down" state when not required for illumination, thereby conserving energy; for example, the sources can be maintained, when not required, in an energised condition where light output is low or insignificant.

In order that the invention may more readily be understood, a description is now given, by way of example only, reference being made to the accompanying drawings, in which:-

Figure 1 shows schematically part of a liquid crystal display embodying the present invention; and

Figure 2 shows another form of light shutter for use in a display embodying the present invention.

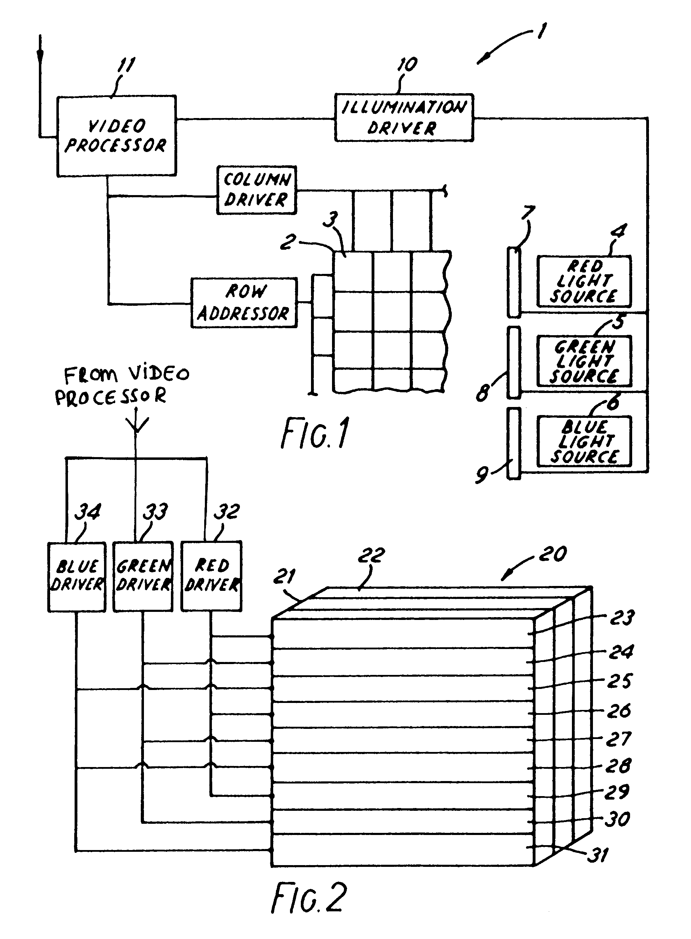

As shown in Figure 1, a display 1 has a multiplexable matrix 2 of selectively settable, i.e. operable, ferroelectric liquid crystal cells 3, the matrix 2 being back lit by red, green and blue light sources 4, 5 and 6 respectively, to produce beams of differently coloured light. In front of each light source 4, 5, 6 is placed a light valve shutter 7, 8 and 9 made of encapsulated liquid crystal material switchable between a light-transmitting mode and a light blocking mode. Colour selective sequential illumination of the matrix is effected by an illumination driver 10 controlled by a video processor 11 which switches the shutters 7, 8, 9 such that each is switched on for only one third of each frame period. The matrix 2 of cells 3 is updated from video processor, 11, at three times the normal frame rate to produce an image so that the appropriate amount of red, green and blue light is transmitted by each pixel, i.e. each cell 3, when each of the respective shutters 7, 8, 9 is switched to its light-transmitting mode to allow through light from the respective light sources 4, 5, 6.

Given a basic TV frame rate of 50 Hz, the basic frame period is 20 ms and the 'light on' period for each shutter is about 7 ms. Current liquid crystal materials with a switching time of 5 ms are therefore adequate for use in the light shutters for this purpose. The light sources may be of filtered white light, or for the purposes of energy conservation, may be made in such a way as to emit light of the chosen wavelength. In the latter case the power consumption requirements of the display could be competitive with those of a conventional filtered display. Several light sources (with associated liquid crystal shutters) might be required for each colour to provide even illumination.

In an alternative embodiment, as shown in Figure 2, an extended light source switchable between the three colours to produce beams of differently coloured light could be made as follows. A light shutter 20 has a sheet of encapsulated liquid crystal material 21 made such that one side carries a continuous transparent electrode 22 and the other a large number of small parallel electrodes 23 to 31 with a coloured filter deposited on each electrode such that the colour sequence is red, green, blue, red, green, blue and so on. Thus the portions of light shutter 20 overlying electrodes 23, 26 and 29 allow through red light when shutter 20 is appropriately driven, likewise those portions corresponding to electrodes 24, 27, 30 in relation to green light, and portions relating to electrodes 25, 28 and 31 for blue light. The light shutter 20 could be laminated to a diffusing screen, (not shown) which could also form the backplate of the ferroelectric display (not shown) and the whole back lit by an extended white light source or by a plurality of white light sources. By appropriate switching of the electrodes on the encapsulated material, a uniform, extended source of red, green or blue light could be produced. As with the embodiment of Figure 1, colour selective sequential illumination of the matrix would be effected by an illumination driver comprising of red driver 32, a green driver 33 and a blue driver 33 and controlled by a video processor (not shown) such that each of the three primary colours is transmitted for only one third of each frame period. The ferroelectric display (not shown) would comprise a matrix of liquid crystal cells which would be updated at three times the normal frame rate to produce an image so that the appropriate amount of red, green and blue light is transmitted by each pixel, i.e. cell, when the respective colour is transmitted by the light shutter 20.

In either of the examples given above the colour balance could easily be adjusted by electrically varying the degree of optical transmission of the light valve shutters in their transmissive state. In the event that the contrast ratio of the liquid crystal shutters is inadequate two or more could be used sandwiched together.

## Claims

1. A display device comprising: A matrix (2) of selectively settable liquid crystal cells (3) for displaying a video image; and light source means (4,5,6) for providing a plurality of different colours, said light source means arranged for illuminating the whole of said matrix (2) in a cyclically repeating and non-overlapping sequence with light of each different colour (4,5,6); the device characterised by light shutter means (7,8,9) comprising a plurality of liquid crystal portions which portions are disposed respectively in the path to said matrix (2) of each of said different colours (4,5,6); and switching means (10) for causing each liquid crystal portion to repetitively interrupt, in accordance with said sequence, the light of its respective colour by inhibiting the transmission of light therethrough.

2. A display device according to Claim 1 wherein said means (4,5,6) to produce a plurality of beams of differently coloured light comprises means to produce beams of light of the three primary colours.

3. A display device according to Claims 1 or 2 wherein said light source means to produce a plurality of beams of differently coloured light comprises a plurality of light sources (4,5,6) each for producing a beam of a differently coloured light.

4. A display device according to any one of the preceding claims wherein a light shutter means (7,8,9) is associated with each of a said beam of differently coloured light.

## Patentansprüche

1. Anzeigevorrichtung mit einer Matrix (2) aus wahlweise setzbaren Flüssigkristallzellen (3) zur Anzeige eines Videobildes; mit Lichtquellenmitteln (4, 5, 6) zur Erzeugung einer Vielzahl von verschiedenen Farben, wobei die Lichtquellenmittel so angeordnet sind, daß sie die gesamte Matrix (2) in einer sich zyklisch wiederholenden und sich nicht überlappenden Reihenfolge mit Licht von jeder verschiedenen Farbe (4, 5, 6) beleuchten; wobei die Vorrichtung gekennzeichnet ist durch Lichtverschlußmittel (7, 8, 9), die aus einer Vielzahl von Flüssigkristallteilen bestehen, die jeweils im Weg jeder verschiedenen Farbe (4, 5, 6) zur Matrix (2) angeordnet sind; und durch Schaltmittel (10), die bewirken, daß jeder Flüssigkristallteil gemäß der genannten Reihenfolge das Licht seiner entsprechenden Farbe wiederholt unterbricht, indem der Durchlaß des Lichts durch ihn gesperrt wird.

2. Anzeigevorrichtung nach Anspruch 1, bei der die Mittel (4, 5, 6) zur Erzeugung einer Vielzahl von Strahlen von verschiedenfarbigem Licht Mittel enthalten, um Lichtstrahlen der drei Primärfarben zu erzeugen.

3. Anzeigevorrichtung nach Anspruch 1 oder 2, bei der die Lichtquellenmittel zur Erzeugung einer Vielzahl von Strahlen mit verschiedenfarbigem Licht aus einer Vielzahl von Lichtquellen (4, 5, 6) bestehen, von denen jede einen verschiedenfarbigen Lichtstrahl erzeugt.

4. Anzeigevorrichtung nach einem der vorhergehenden Ansprüche, bei der jedem der verschiedenfarbigen Lichtstrahlen ein Lichtverschlußmittel (7, 8, 9) zugeordnet ist.

**Revendications**

1.  Dispositif d'affichage comprenant: une matrice (2) de cellules (3) à cristaux liquides réglables sélectivement pour afficher une image vidéo; et un moyen de sources lumineuses (4, 5, 6) pour fournir une pluralité de couleurs différentes, ledit moyen de sources lumineuses arrangé pour éclairer la totalité de ladite matrice (2) dans une séquence se répétant périodiquement et sans recouvrement avec une lumière pour chaque couleur différente (4, 5, 6); le dispositif caractérisé par des moyens d'obturation de la lumière (7, 8, 9) comprenant une pluralité de parties à cristaux liquides lesquelles parties sont déposées respectivement sur le chemin de ladite matrice (2) de chacune desdites couleurs différentes (4, 5, 6); et un moyen de commutation (10) pour provoquer pour chaque partie à cristaux liquides, une interruption, selon ladite séquence, de la lumière de sa couleur respective en inhibant la transmission de lumière.

2.  Dispositif d'affichage selon la revendication 1 dans lequel ledit moyen (4, 5, 6) pour produire une pluralité de rayons de lumière colorés différemment comprend un moyen pour produire des rayons de lumière des trois couleurs primaires.

3.  Dispositif d'affichage selon les revendications 1 ou 2 dans lequel ledit moyen de sources lumineuses pour produire une pluralité de rayons de lumière colorés différemment comprend une pluralité de sources lumineuses (4, 5, 6) chacune produisant un rayon de lumière coloré différemment.

4.  Dispositif selon toute revendication précédente dans lequel un moyen d'obturation de lumière (7, 8, 9) est associé à chacun dudit rayon de lumière coloré différemment.

FIG.1

FIG.2